(19) Europäisches Patentamt
European Patent Office
Office européen des brevets

(11) EP 2 468 502 A1

(12) **EUROPEAN PATENT APPLICATION**
published in accordance with Art. 153(4) EPC

(43) Date of publication:
**27.06.2012 Bulletin 2012/26**

(21) Application number: **10810058.7**

(22) Date of filing: **19.08.2010**

(51) Int Cl.:
***B32B 27/36*** *(2006.01)* ***B29C 45/14*** *(2006.01)*
***C08G 64/02*** *(2006.01)*

(86) International application number:
**PCT/JP2010/064428**

(87) International publication number:
**WO 2011/021721 (24.02.2011 Gazette 2011/08)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **21.08.2009 JP 2009191991**

(71) Applicant: **Teijin Limited**
**Osaka-shi, Osaka 541-0054 (JP)**

(72) Inventor: **KINOSHITA Masami**
**Tokyo 100-0013 (JP)**

(74) Representative: **Adam, Holger**
**Kraus & Weisert**
**Patent- und Rechtsanwälte**
**Thomas-Wimmer-Ring 15**
**80539 München (DE)**

# (54) INSERT-MOLDED PRODUCT

(57) This invention provides an insert-molded article that is excellent in mechanical strength and melt-flowability, has a high surface hardness and is formed of a polycarbonate resin obtained from biomass resources.

This invention is an insert-molded article obtained by inserting a functional resin film in a mold beforehand and injecting a polycarbonate resin to mold it, wherein the polycarbonate resin comprises a constituent unit derived from a dihydroxy compound represented by the following formula (a).

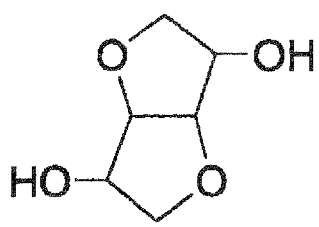

(a)

EP 2 468 502 A1

## Description

Technical Field

This invention relates to an insert molded article formed of a specific polycarbonate resin. More specifically, it relates to an insert molded article formed of a carbonate polymer having excellent mechanical strength, high fluidity and high surface hardness and containing isosorbide as a biomass resource.

Background Art

In recent years, due to concerns about depletion of petroleum resources and an increase of carbon dioxide in air that causes global warming, biomass resources have come be greatly spotlighted which do not rely on petroleum as a raw material and which satisfy carbon neutrality of being free from an increase in carbon dioxide when combusted. In the field of polymers as well, biomass plastics produced from biomass resources have been actively developed.

A typical example of the biomass plastics is polylactic acid. Since it has relatively high heat resistance and mechanical properties among the biomass plastics, it is coming to be used in the fields of dishes, packaging materials, general merchandise, etc., and its possibility as an industrial material has also come to be studied.

However, polylactic acid has insufficient heat resistance for use as an industrial material, and it has low crystallinity as a crystalline polymer when molded articles are obtained by highly productive injection molding, so that it is inferior in moldability.

As a highly heat-resistant non-crystalline polycarbonate resin using a biomass resource as a raw material, studies have been made on a polycarbonate resin using a raw material obtained from an ether diol residue that can be produced from sugars.

For example, an ether diol of the following formula (a) is easily produced from renewable resources such as sugars and starch, and three kinds of stereoisomers are known.

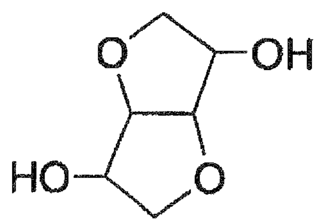

(a)

Specifically, they are 1,4:3,6-dianhydro-D-sorbitol (to be referred to as "isosorbide" hereinafter in the present text) represented by the following formula (b),

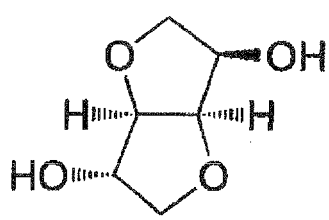

(b)

1,4:3,6-dianhydro-D-mannitol (to be referred to as "isomannide" hereinafter in the present text) represented by the following formula (c),

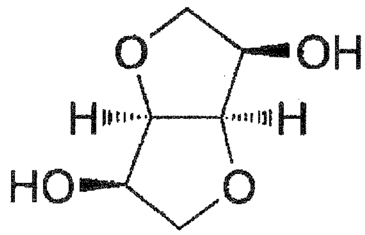

(c)

and 1,4:3,6-dianhydro-L-iditol (to be referred to as "isoidide hereinafter in the present text) represented by the following formula (d).

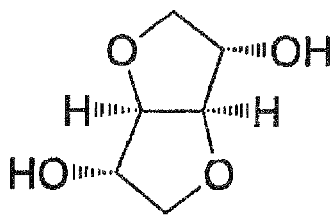

(d)

Isosorbide, isomannide and isoidide can be produced from D-glucose, D-mannose and L-idose, respectively. For example, isosorbide can be produced by hydrogenating D-glucose and then dehydrating it with an acid catalyst.

It has been heretofore studied to incorporate in particular isosorbide of the above ether diols into a polycarbonate as the main monomer. In particular, homopolycarbonate of isosorbide is described in Patent Documents 1 and 2 and Non-patent Documents 1 and 2. Of these, Patent Document 1 reports on a homopolycarbonate having a melting point of 203˚C using a melt ester exchange method. In Non-patent Document 1, a homopolycarbonate having a glass transition temperature of 166˚C is obtained by a melt ester exchange method using zinc acetate as a catalyst. However, it has a thermal decomposition temperature (5 % weight loss temperature) of 283˚C, that is insufficient in thermally stability. In Non-patent Document 2, a homopolycarbonate is obtained by interfacial polymerization using bischloroformate of isosorbide, while it has a glass transition temperature of 144˚C, that is insufficient in heat resistance (in particular, heat resistance by moisture absorption). Meanwhile, as an example having high heat resistance, Patent Document 2 reports on a polycarbonate having a glass transition temperature of 170˚C or higher measured by differential calorimetry at a temperature elevation rate of 10˚C/min. However, when intending to apply it to an industrial material, its molding temperature is high for obtaining a molded article by injection molding since its glass transition temperature is high, thereby promoting the decomposition of a polymer.

That is, there has not been obtained any polycarbonate resin which uses isosorbide as a monomer, has melt flowability suitable for injection molding and heat-resistant stability and can give an inert molded article that exhibits excellent heat resistance, mechanical properties and environmental resistance.

Conventionally, decorated molded articles obtained by decorating the surfaces of substrates of resin molded articles have been used in various fields. For example, a simultaneous injection molding-decorating method is disclosed in Patent Document 3, etc., wherein a resin molded product having decorated surface is obtained by molding a resin and laminating a decorating sheet on the surface at the same time. For example, Patent document 3 proposes a method for producing a molded article having a surface coated with sheet, in which decorating sheet laminated with a backer layer thereon is formed on an inner wall surface of a mold, then a resin is injected to be mold, and a method in which a molded article is produced by inert molding.

In the insert molding, vacuum forming is followed by injection molding, so that the surface of a decorating sheet is damaged or deformed or is liable to be soiled during the transfer between the step of vacuum forming and the step of injection molding. For overcoming this problem, it is proposed to laminate a protective film on the decorating sheet (Patent Documents 4-8).

One of reasons for the requirement of supporting materials such as a backer layer or a protective film is that the flowability of a molding resin is insufficient. Normally, polycarbonate is widely used for these molded articles, while there is a limitation to the further achieving of higher flowability with maintaining mechanical properties.

Further, Patent Document 9, etc., describe a method for hard-coating an insert-molded product, while molding materials for electric and electronic parts for cellphones and PDA (personal digital assistants) are also required to have surface hardness. That is, it has been a latent demand to more improve the surface hardness of a polycarbonate that

is mainly used as a molding material.

(Patent Document 1) Publication No. 1079686 of British Patent Application
(Patent Document 2) International Publication No. 2007/013463
(Patent Document 3) JP 8-2550B
(Patent Document 4) JP 10-329169 A
(Patent Document 5) JP 10-329170 A
(Patent Document 6) JP 2001-145981 A
(Patent Document 7) JP 2002-240202 A
(Patent Document 8) JP 2002-360809 A
(Patent Document 9) JP 2008-32928 A
(Non-Patent Document 1) "Journal of Applied Polymer Science", 2002, Vol. 86, pages 872-880
(Non-Patent Document 2) "Macromolecules" 1996, Vol. 29, pages 8077-8082

Disclosure of the Invention

It is an object of this invention to provide an inert molded article having excellent mechanical strength and a high surface hardness and being formed of a polycarbonate resin from a biomass resource.

For achieving the above object, the present inventors have made diligent studies, and as a result, it was found that an insert molded article having excellent mechanical properties and a high surface hardness and having excellent environmental resistance could be obtained by using a polycarbonate resin having a specific structure and melt flowability, which has led to the completion of this invention.

That is, according to this invention, the following inventions are provided.

1. A molded article comprising a functional resin film and a substrate, the substrate being formed of a polycarbonate resin containing a constitutional unit derived from a dihydroxy compound represented by the following formula (a).

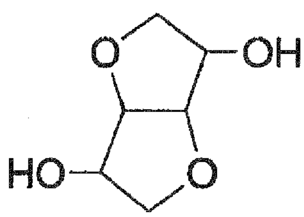

(a)

2. A molded article as recited in the above 1, wherein the polycarbonate resin has a melt viscosity, measured with a capillary rheometer at 240˚C under conditions of a shear rate of 6,080 $sec^{-1}$, in the range of 0.01 x $10^3$ to 0.30 x $10^3$ Pa·s.
3. A molded article as recited in the above 1, wherein the content of the constitutional unit derived from a dihydroxy compound represented by the formula (a) in the polycarbonate resin is 100 to 30 mol% based on the total of carbonate bond units.
4. A molded article as recited in the above 1, wherein the functional resin film is formed of at least one thermoplastic resin selected from the group consisting of a polyethylene terephthalate resin, a polybutylene terephthalate resin, a polycarbonate resin, an ABS resin and an acrylic resin.
5. A process for producing an insert molded article, which comprises the steps of

(i) inserting a functional resin film in a mold, and .
(ii) injecting a polycarbonate resin containing a constitutional unit derived from a dihydroxy compound represented by the following formula (a) into the mold and molding the same therein.

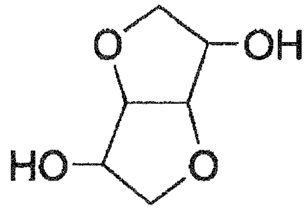

(a)

6. A process as recited in the above 5, wherein the polycarbonate resin has a melt viscosity, measured with a capillary rheometer at 240°C under conditions of a shear rate of 6,080 $sec^{-1}$, in the range of 0.01 x $10^3$ to 0.30 x $10^3$ Pa·s.

7. A process as recited in the above 5, wherein the content of the constitutional unit derived from a dihydroxy compound represented by the formula (a) in the polycarbonate resin is 100 to 30 mol% based on the total of carbonate bond units.

8. A process as recited in the above 5, wherein the functional resin film is formed of at least one thermoplastic resin selected from the group consisting of a polyethylene terephthalate resin, a polybutylene terephthalate resin, a polycarbonate resin, an ABS resin and an acrylic resin.

Best Mode for Carrying out the Invention

The molded article of this invention will be explained hereinafter.

<Molded Article>

(Functional resin film)

The functional resin film includes those which give a decoration on a resin molded product and further impart it with hard-coating properties such as abrasion resistance and high surface hardness and solvent resistance.

In this invention, the functional resin film can be obtained by forming a decorating layer on one surface of a film. The method for forming a decorating layer includes a method of applying an ink by a known printing method or coating method. Specifically, it can be selected from conventionally known various methods such as a gravure printing method, a flexographic printing method, a silk screen printing method, an offset printing method, a roll coating method, a gravure coating method and a comma coating method. The ink used for forming the decorating layer may contain, as a binder, any one of known thermoplastic resins such as an acrylic resin, a polyvinyl resin, a polyester resin, a polyurethane resin and a polyamide resin.

When the decorating layer has a metallic tone, the ink contains a high-brightness pigment as an essential component, and for example, it contains a high-brightness pigment including an aluminum pigment such as a nonleafing aluminum paste (a trade name of Showa Aluminum Powder K.K.) and a pearl pigment such as "Iriodin" (a trade name of Merck Chemicals. Japan). An example of preferred commercially available product of the above aluminum pigment may contain a pigment or dye of a proper color as a colorant.

In addition to the printing method and coating method, a decorating layer having a metallic tone can be formed by a known method such as a vacuum vapor deposition method, a sputtering method, an ion plating method or a plating method. A known metal can be used for the decorating layer, while it is preferred from the viewpoint of in-mold moldability to use aluminum or indium excellent in malleability or an alloy of any one of these.

As a method for decoration, there is known a method in which a decorating sheet for injection molding comprising a base film laminated with a decorating layer thereon and further terminated with a hard-coating layer as an outermost layer, is attached to a resin molded article during its molding.

The base film material includes a polyester resin, a polypropylene resin, a polyvinyl chloride resin, an acrylic resin, a polyamide resin, a polycarbonate resin and a styrene resin. Of these base film materials, a polyester resin, a polycarbonate resin, a styrene resin and an acrylic resin are preferred, and a polyester resin and an acrylic resin are particularly preferred.

The total thickness of the functional resin film is preferably in the range of 20 to 200 μm, more preferably 50 to 150 μm, still more preferably 60 to 140 μm.

(Substrate)

The polycarbonate resin (component A) for forming the substrate in this invention preferably has a melt viscosity

measured with a capillary rheometer at 240°C under a shear rate of 6,080 $sec^{-1}$, in the range of 0.01 x $10^3$ to 0.30 x $10^3$ Pa·s, more preferably of 0.01 x $10^3$ to 0.25 x $10^3$ Pa·s, still more preferably of 0.01 x $10^3$ to 0.24 x $10^3$ Pa·s. When the melt viscosity is in the above ranges, it is effective for inhibiting a resin residing mark (flow mark) that occurs in a mold during injection molding, and also effective for decreasing an influence in particular on an insert material and consequently decreasing the percentage of rejects in insert molding.

The content of a unit derived from a dihydroxy compound represented by the formula (a) in the polycarbonate resin, based on the total of carbonate bond units, is preferably 100 to 30 mol%, more preferably 100 to 40 mol%, still more preferably 100 to 50 mol%. As other component, the polycarbonate resin may contain an aliphatic diol residue derived from an aliphatic dihydroxy compound. This aliphatic dihydroxy compound is preferably a linear aliphatic diol or an alicyclic diol.

Further, it may contain, as other component, an aromatic diol residue derived from an aromatic dihydroxy compound.

The polycarbonate resin for use in this invention can be produced from an ether diol represented by the following formula (a),

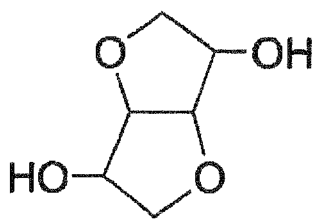

(a)

and a carbonate diester by a melt polymerization method. The ether diol specifically includes isosorbide, isomannide and isoidide represented by the following formulae (b), (c) and (d).

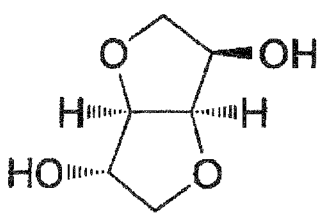

(b)

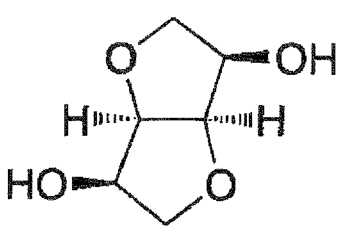

(c)

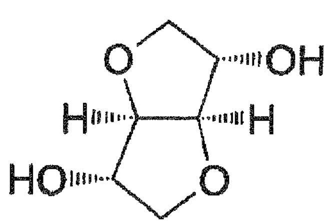

(d)

These ether diols derived from sugar are materials that are obtained from biomass in the natural world, and

they are also called renewable sources. Isosorbide is obtained by hydrogenating D-glucose obtained from starch and then subjecting it to dehydration. The other ether diols can be also obtained by a similar reaction except for starting materials.

In particular, a polycarbonate resin of which the carbonate constitutional unit contains a carbonate constitutional unit derived from isosorbide (1,4:3,6-dianhydro-D-sorbitol) is preferred. Isosorbide is an ether diol that can be easily produced from starch and is abundantly available as a resource, and it is excellent in all of easiness in production, properties and broadness in use over isomannide and isoidide.

On the other hand, the other diol that can be used together with the ether diol derived from plants includes a linear aliphatic diol compound, an alicyclic diol compound and an aromatic dihydroxy compound. These may be used singly or in combination.

Examples of the linear aliphatic diol compound include ethylene glycol, 1,3-propanediol, 1,4-butanediol, 1,5-heptanediol, neopentyl glycol, 1,6-hexanediol, 1,7-heptanediol, 1,8-octanediol, 2-ethyl-1,6-hexanediol, 2,2,4-trimethyl-1,6-hexanediol, 1,10-decanediol, hydrogenated dilinoleyl glycol and hydrogenated dioleyl glycol. Of these, 1,3-propanediol, 1,4-butanediol, 1,6-hexanediol and 1,10-dcanediol are preferred. These linear aliphatic diols may be used singly or in combination of the two or more of them.

Further, examples of the alicyclic diol include cyclohexanediols such as 1,2-cyclohexanediol, 1,3-cyclohexanediol, 1,4-cyclohexanediol, 2-methyl-1,4-cyclohexanediol, cyclohexanedimethanols such as 1,2-cyclohexanedimethanol, 1,3-cyclohexanedimethanol and 1,4-cyclohexanedimethanol, norbornanedimethanols such as 2,3-norbornanedimethanol and 2,5-norbornanedimethanol, tricyclodecanedimethanol, pentacyclopentadecanedimethanol, 1,3-adamantanediol, 2,2-adamantanediol, decalindimethanol and 3,9-bis(2-hydroxy-1,l-dimethylethyl)-2,4,8,10-tetraoxaspiro[5.5] undecane. Of these, 1,4-cyclohexanedimethanol, tricyclodecanedimethanol and 3,9-bis(2-hydroxy-1,1-dimethylethyl)-2,4,8,10-tetraoxaspiro[5.5]undecane are preferred. These alicyclic diols may be used singly or in combination of the two or more of them.

Further, examples of the aromatic dihydroxy compound include 4'-biphenol, 3,3',5,5'-tetrafluoro-4,4'-biphenol, $\alpha,\alpha'$-bis(4-hydroxyphenyl)-o-diisopropylbenzene, $\alpha,\alpha'$-bis(4-hydroxyphenyl)-m-diisopropylbenzene (normally called "bisphenol M"), $\alpha,\alpha'$-bis(4-hydroxyphenyl)-p-diisopropylbenzene, $\alpha,\alpha'$-bis(4-hydroxyphenyl)-m-bis(1,1,1,3,3,3-hexafluoroisopropyl)benzene, 9,9-bis(4-hydroxyphenyl)fluorene, 9,9-bis(4-hydroxy-3-methylphenyl)fluorene, 9,9-bis(3-fluoro-4-hydroxyphenyl)fluorene, 9,9-bis(4-hydroxy-3-trifluoromethyl)fluorene, 1,1-bis(4-hydroxyphenyl)cyclohexane, 1,1-bis(4-hydroxyphenyl)-3,3,5-trimethylcyclohexane, 1,1-bis(4-hydroxyphenyl)-4-isopropylcyclohexane, 1,1-bis(3-cyclohexyl-4-hydroxyphenyl)cyclohexane, 1,1-bis(4-hydroxyphenyl)cyclopentane, 1,1-bis(3-fluoro-4-hydroxyphenyl)cyclohexane, 1,1-bis(4-hydroxyphenyl)perfluorocyclohexane, 4,4'-dihydroxydiphenyl ether, 4,4'-dihydroxy-3,3'-dimethyldiphenyl ether, 4,4'-dihydroxydiphenylsulfone, 4,4'-dihydroxydiphenylsulfoxide, 4,4'-dihydroxydiphenylsulfide, 3,3'-dimethyl-4,4'-dihydroxydiphenylsulfide, 3,3'-dimethyl-4,4'-dihydroxydiphenylsulfone, 4,4'-dihydroxydiphenylsulfone, 4,4'-dihydroxy-3,3'-diphenylsulfide, 4,4'-dihydroxy-3,3'-diphenylsulfoxide, 4,4'-dihydroxy-3,3'-diphenylsulfone, 1,1-bis(4-hydroxyphenyl)methane, 1,1-bis(4-hydroxyphenyl)ethane, 2,2-bis(4-hydroxyphenyl)propane (normally called "bisphenol A"), 1,1-bis(4-hydroxyphenyl)-1-phenylethane, 2,2-bis(4-hydroxy-3-methylphenyl)propane (normally called "bisphenol C"), 2,2-bis(4-hydroxyphenyl)butane, 2,2-bis(4-hydroxyphenyl)pentane, 2,2-bis(4-hydroxy-3-phenylphenyl)propane, 2,2-bis(3-isopropyl-4-hydroxyphenyl)propane, 2,2-bis(3-tert-butyl-4-hydroxyphenyl)propane, 2,2-bis(4-hydroxyphenyl)butane, 4,4-bis(4-hydroxyphenyl)heptane, 2,2-bis(4-hydroxyphenyl)octane, 1,1-bis(4-hydroxyphenyl)decane, 1,1-bis(3-methyl-4-hydroxyphenyl)decane, 1,1-bis(2,3-dimethyl-4-hydroxyphenyl)decane, 2,2-bis(3-bromo-4-hydroxyphenyl)propane, bis(4-hydroxyphenyl)diphenylmethane, 1,1-bis(4-hydroxyphenyl)-4-isopropylcyclohexane, 2,2-bis(4-hydroxyphenyl)-1,1,1,3,3,3-hexafluoropropane (normally called "bisphenol AF"), 2,2-bis(4-hydroxy-3-methylphenyl)-1,1,1,3,3,3-hexafluoropropane, 2,2-bis(3,5-dimethyl-4-hydroxyphenyl)-1,1,1,3,3,3-hexafluoropropane, 2,2-bis(3-fluoro-4-hydroxyphenyl)-1,1,1,3,3,3-hexafluoropropane, 2,2-bis(3,5-difluoro-4-hydroxyphenyl)-1,1,1,3,3,3-hexafluoropropane, 2,2-bis(3,5-dibromo-4-hydroxyphenyl)propane, 2,2-bis(3,5-dichloro-4-hydroxyphenyl)propane, 2,2-bis(3,5-dimethyl-4-hydroxyphenyl)propane, and 2,2-bis(3-cyclohexyl-4-hydroxyphenyl)propane.

Of the above-described compounds, bisphenol M, 9,9-bis(4-hydroxy-3-methylphenyl)fluorene, 1,1-bis(4-hydroxyphenyl)cyclohexane, 1,1-bis(4-hydroxyphenyl)-3,3,5-trimethylcyclohexane, 3,3'-dimethyl-4,4'-dihydroxydiphenylsulfide, bisphenol A, bisphenol C, bisphenol AF and 1,1-bis(4-hydroxyphenyl)decane are preferred. These aromatic diols may be used singly or in combination of the two or more of them.

The content of the diol residue derived from the above other diol compounds based on the total of diol residues is preferably 0 to 70 mol%, more preferably 0 to 60 mol%, still more preferably 0 to 50 mol% in the polycarbonate resin.

With regard to the reaction temperature, it is preferred to employ temperature conditions of as low as possible for obtaining a resin being less colored and having a high viscosity. The polymerization temperature for properly proceeding with the polymerizing reaction is preferably in the range of 180°C to 280°C, more preferably 180°C to 260°C.

Further, preferred is a method in which the ether diol and carbonate diester are hearted under atmospheric pressure to allow them to undergo a preliminary reaction in an initial stage of the reaction and then the pressure of the reaction system is reduced to approximately $1.3x10^{-3}$ to $1.3x10^{-5}$ MPa in a later stage of the reaction by gradually

decreasing the pressure to make it easy to distill off a formed alcohol or phenol. The reaction time period is normally approximately 0.5 to 4 hours.

The carbonate diester includes an aryl group or aralkyl group having 6 to 12 carbon atoms, in which the hydrogen atom may be substituted, or an ester such as alkyl group having 1 to 4 carbon atoms. Specifically, it includes diphenyl carbonate, bis(chlorophenyl) carbonate, m-cresyl carbonate, dinaphthyl carbonate, bis(diphenyl)carbonate, dimethyl carbonate, diethyl carbonate and dibutyl carbonate, and of these, diphenyl carbonate is preferred from the viewpoint of reactivity and a cost.

When the carbonate diester is mixed with the ether diol, the molar ratio of the carbonate diester to the ether diol is preferably from 1.02 to 0.98, more preferably from 1.01 to 0.98, still more preferably from 1.01 to 0.99. When the molar ratio of the carbonate diester is larger than 1.02, undesirably, a carbonate diester residue works to block the terminal, and a sufficient polymerization degree can be no longer obtained. When the molar ratio of the carbonate diester is smaller than 0.98, undesirably, a sufficient polymerization degree can be no longer obtained.

The polymerization catalyst includes alkali metal compounds such as sodium hydroxide, potassium hydroxide, sodium carbonate, potassium carbonate, sodium hydrogen carbonate and a sodium salt or potassium salt of dihydric phenol, alkaline earth metal compounds such as calcium hydroxide, barium hydroxide and magnesium hydroxide, and nitrogen-containing basic compounds such as tetramethylammonium hydroxide, tetraethylammonium hydroxide, tetrabutylammonium hydroxide, trimethylamine and triethylamine. These may be used singly or in combination of the two or more of them. Above all, it is preferred to use a nitrogen-containing basic compound and an alkali metal compound in combination. A polymer obtained in the presence of these catalysts is preferred since it keeps the 5 % weight loss temperature fully high.

The amount of the polymerization catalyst per mole of the carbonate diester component is preferably in the range of $1x10^{-9}$ to $1x10^{-3}$ equivalent weight, more preferably $1x10^{-8}$ to $5x10^{-4}$ equivalent weight. Further, preferably, the reaction system is held in an inert atmosphere to the raw materials, the reaction mixture and the reaction product, such as nitrogen. The inert gas other than nitrogen includes argon. Further, an additive such as an antioxidant may be added as required.

In the polycarbonate resin obtained by carrying out the above reaction, the terminal structure is of a hydroxy group or a carbonate diester residue, while other terminal group may be separately introduced to the polycarbonate resin for use in this invention so long as its properties are not impaired. Such a terminal group can be introduced by adding a monohydroxy compound during the polymerization. As a monohydroxy compound, a hydroxy compound of the following formula (2) or (3) is preferably used.

$$-O-R^1 \quad (2)$$

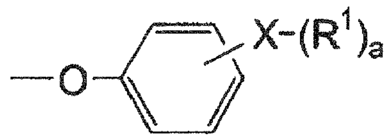

(3)

In the above formulae (2) and (3), $R^1$ is an alkyl group having 4 to 30 carbon atoms, an aralkyl group having 7 to 30 carbon atoms, a perfluoroalkyl group having 4 to 30 carbon atoms or the following formula (4).

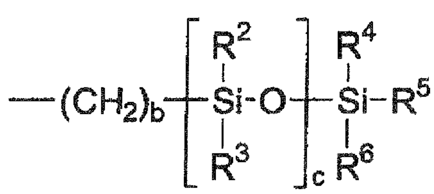

(4)

It is preferably an alkyl group having 4 to 20 carbon atoms, a perfluoroalkyl group having 4 to 20 carbon atoms or the above formula (4), and particularly preferably an alkyl group having 8 to 20 carbon atoms or the above formula (4). X is preferably at least one bond selected from the group consisting of a single bond, an ether bond, a thioether bond, an ester bond, an amino bond and an amide bond, and more preferably at least one bond selected from the group consisting of a single bond, an ether bond and an ester bond. Above all, it is preferably a single bond or an ester bond.

"a" is an integer of 1 to 5, preferably an integer of 1 to 3, particularly preferably 1.

In the above formula (4), each of $R^2$, $R^3$, $R^4$, $R^5$ and $R^6$ is independently at least one group selected from the group consisting of an alkyl group having 1 to 10 carbon atoms, a cycloalkyl group having 6 to 20 carbon atoms, an alkenyl group having 2 to 10 carbon atoms, an aryl group having 6 to 10 carbon atoms and an aralkyl group having 7 to 20 carbon atoms, preferably at least one group selected from the group consisting of an alkyl group having 1 to 10 carbon atoms and an aryl group having 6 to 10 carbon atoms, and particularly preferably, each is independently at least one group selected from the group consisting of methyl group and phenyl group. b is an integer of 0 to 3, preferably an integer of 1 to 3, particularly preferably an integer of 2 or 3. c is an integer of 4 to 100, preferably an integer of 4 to 50, particularly preferably an integer of 8 to 50. The polycarbonate resin (component A) for use in this invention has a carbonate constitutional unit obtained from the ether diol represented by the above formula (a) as a renewable resource in the main chain structure, and hence this monohydroxy compound is preferably a raw material obtained from renewable resources such as plants. The monohydroxy compound obtained from plants includes long-chain alkyl alcohols having 14 or more carbon atoms (cetanol, stearyl alcohol and behenic alcohol) obtained from plant oils.

When these terminal groups are introduced, the insert molded article formed from the above polycarbonate resin has effects more improved in resistance to moisture absorption or surface energy properties (antifouling property and abrasion resistance). The content of these terminal groups based on the polymer main chain structure is preferably 0.3 to 9.0 % by weight, more preferably 0.3 to 7.5 % by weight, particularly preferably 0.5 to 6.0 % by weight.

The substrate may be formed from a resin composition prepared by adding various components to the above polycarbonate resin. Examples of such usable components are as follows.

(i) Inorganic filler

When an inorganic filler is incorporated into the resin composition for constituting the insert molded article of this invention, there can be obtained a molded article that is excellent in mechanical properties and dimensional properties.

The inorganic filler includes generally known various inorganic fillers such as a glass fiber, a carbon fiber, glass flakes, wollastonite, kaolin clay, mica, talc and various whiskers (potassium titanate whisker and aluminum borate whisker). The form of the inorganic filler can be selected from the form of flakes, the form of spheres and a hollow form as required, and for improving the resin composition in strength and impact resistance, an inorganic filler having the form of a fiber or flakes is suitable.

Above all, the inorganic filler is preferably an inorganic filler composed of pulverization product of a natural mineral, more preferably an inorganic filler composed of pulverization product of natural mineral of silicate, and from the viewpoint of its form, mica, talc and wollastonite are preferred.

Meanwhile, these inorganic fillers are non-oil resource materials compared with a carbon fiber which is oil resource material, and a raw material having a smaller environmental burden is used. As a result, there is an effect that the significance of use of the component A having a smaller environmental burden can be enhanced. Further, the above more preferred inorganic filler produces an advantageous effect that it exhibits excellent flame retardancy as compared with a carbon fiber.

In the mica that can be used in this invention, the average particle diameter obtained by observing the mica through a scanning electron microscope, then extracting particles having a size of 1 μm or more and averaging 1,000 pieces of the extracted particles as a number average particle size, is preferably 10 to 500 μm, more preferably 30 to 400 μm, still more preferably 30 to 200 μm, the most preferably 35 to 80 μm. When the number average particle diameter is less than 10 μm, the impact strength may be sometimes decreased. When it exceeds 500 μm, the impact strength is improved, while the appearance is liable to be deteriorated.

Mica having a thickness of 0.01 to 10 μm measured by observing it through an electron microscope can be used. Preferably, mica having a thickness of 0.1 to 5 μm can be used. Concerning its aspect ratio, mica having an aspect ratio of 5 to 200, preferably 10 to 100, can be used. Further, as the mica to be used, muscovite mica is preferred, and it has a Mohs hardness of about 3. Muscovite mica can achieve high rigidity and high strength as compared with other mica, and it serves to provide a more preferred insert molded article.

Further, the method of pulverizing mica includes a dry pulverization method in which mica rude ore is pulverized with a dry pulverizer and a wet pulverization method in which mica rude ore is coarsely pulverized, and then, the coarsely pulverized product is pulverized in a full-fledged manner with a wet pulverizer in a slurry state produced by adding a pulverizing aid such as water, followed by dehydration and drying. This invention can use mica produced by any one of the pulverization methods, while one produced by the dry pulverization method is inexpensive and is normally used. On the other hand, the wet pulverization method is effective for pulverizing mica more thinly and more finely, while it costs much. Mica may be surface-treated with any one of various surface treating agents such as a silane coupling agent, a higher fatty acid ester and a wax. Further, it may be granulated with a sizing agent including various resins, a higher fatty acid ester and a wax to be in the form of granules.

The talc can be used in this invention is of scaly particles each having a laminar structure and is hydrous

magnesium silicate as a chemical composition. Generally, it is represented by the chemical formula of $4Sio_2 \cdot 3MgO \cdot 2H_2O$ and is normally composed of 56 to 65 % by weight of $SiO_2$, 28 to 35 % by weight of MgO and approximately 5 % by weight of $H_2O$. As other miner components, it contains 0.03 to 1.2 % by weight of $Fe_2O_3$, 0.05 to 1.5 % by weight of $Al_2O_3$, 0.05 to 1.2 % by weight of CaO, 0.2 % by weight or less of $K_2O$, 0.2 % by weight or less of $Na_2O$, etc., and it has a specific gravity of about 2.7 and a Mohs hardness of 1.

The average particle diameter of the talc can be used in this invention is preferably 0.5 to 30 μm. This average particle diameter is a particle diameter at an accumulation ratio of 50 % determined on the basis of a particle size distribution measured by an Andreasen pipette method according to JIS M8016. The average particle diameter of the talc is more preferably 2 to 30 μm, still more preferably 5 to 20 μm, the most preferably 10 to 20 μm. Talc having an average particle diameter in the range of 0.5 to 30 μm imparts an insert molded article with an excellent surface appearance and flame retardancy in addition to rigidity and low anisotropy.

The method of pulverizing rude ore to produce talc is not specially limited, and an axial flow type milling method, an annular mill method, a roll milling method, a ball mill method, a jet mill method and a vessel-rotation compression shear type milling method can be used. Further, pulverized talc is classified with various classifiers, and talc having a uniform particle diameter distribution is preferred. The classifier is not specially limited, and it includes an impacter type inertial classifier (variable impacter), a Coanda-effect-applied inertial classifier (elbow jet) and centrifugal field classifiers (multicyclone, microplex, dispersion separator, AccuCut, turbo classifier, turboplex, micron separator and super separator).

Further, the talc is preferably in the state of being agglomerated in respect of its handling property, and a process for producing the same includes a method based on deaeration/compression and a method of compression using a sizing agent. In particular, the method based on deaeration/compression is preferred in that it is simple and prevents the molded article of this invention from including an unnecessary sizing resin component.

The wollastonite that can be used in this invention is substantially represented by the chemical formula of $CaSiO_3$, and it normally contains approximately 50 % by weight or more of $SiO_2$, approximately 47 % by weight or more of CaO and others such as $Fe_2O_3$ and $Al_2O_3$. The wollastonite is a white acicular powder obtained by pulverizing rude ore of wallastonite and classifying the pulverization product, and it has a Mohs hardness of about 4.5. The average fiber diameter of the wollastonite for use is preferably 0.5 to 20 μm, more preferably 0.5 to 10 μm, the most preferably 1 to 5 μm. The above average fiber diameter is calculated by observing it through a scanning electron microscope, extracting a total of 1,000 pieces of fibers having a diameter of 0.1 μm or more and averaging them.

The amount of these inorganic fillers per 100 parts by weight of the polycarbonate resin is preferably 0.3 to 200 parts by weight, more preferably 1.0 to 100 parts by weight, the most preferably 3 to 50 parts by weight. When the above amount is smaller than 0.3 part by weight, the reinforcement effect on mechanical properties of the molded article of this invention is not sufficient. When it exceeds 200 parts by weight, undesirably, the moldability and color hue are deteriorated.

When the inorganic filler in the form of fibers or flakes is incorporated into the resin composition for constituting the molded article of this invention, the resin composition may contain an agent for inhibiting the breaking of them. The breaking-inhibiting agent inhibits the adhesion between the matrix resin and the inorganic filler and decreases a stress that is exerted on the inorganic filler during melt-kneading to inhibit the breaking of the inorganic filler. The effect of the breaking-inhibiting agent includes (1) an improvement in rigidity (the aspect ratio of the inorganic filler is increased), (2) an improvement in tenacity and (3) an improvement in conductivity (when a conductive inorganic filler is used). Specifically, the breaking-inhibiting agent includes (i) a compound that has low affinity with the resin and is coated directly on the inorganic filler and (ii) a compound that has structurally low affinity with the resin and has a functional group which can react with the surface of the inorganic filler.

The compound having low affinity with the resin includes various lubricants. Examples of the lubricants include a mineral oil, a synthetic oil, a higher fatty acid ester, a higher fatty acid amide, polyorganosiloxane (such as silicone oil and silicone rubber), olefin wax (paraffin wax and polyolefin wax), polyalkylene glycol, fluorinated fatty acid ester, trifluorochloroethylene and fluorine oils such as polyhexafluoropropylene glycol.

The method of coating the compound having low affinity with the resin directly on the surface of the inorganic filler includes (1) a method in which the above compound is directly immersed, or a solution or emulsion of the compound is immersed in the inorganic filler, (2) a method in which the inorganic filler is allowed to pass through a vapor or powder of the above compound, (3) a method in which a powder of the above compound is sprayed to the inorganic filler at a high speed, and (4) a mechano-chemical method in which the inorganic filler and the above compound are brought into frictional contact with each other.

The compound that has structurally low affinity with the resin and has a functional group which can react with the surface of the inorganic filler includes the above lubricants modified with various functional groups. Examples of these functional groups include a carboxyl group, a carboxylic acid anhydride group, an epoxy group, an oxazoline group, an isocyanate group, an ester group, an amino group and an alkoxysilyl group.

One of preferred breaking-inhibiting agents is an alkoxysilane compound in which an alkyl group having 5 or

more carbon atoms is bonded to a silicon atom. The number of carbon atoms of the alkyl group bonded to the silicon atom is preferably 5 to 60, more preferably 5 to 20, still more preferably 6 to 18, particularly preferably 8 to 16. The number of alkyl groups is preferably 1 or 2, particularly preferably 1. The alkoxy group preferably includes methoxy group and ethoxy group. The above alkoxysilane compound is preferred in that it has high reactivity with the surface of the inorganic filler and is hence excellent in coating efficiency. Therefore, it is preferably used for a finer in organic filler.

One of preferred breaking-inhibiting agents is a polyolefin wax having at least one functional group selected from a carboxyl group and a carboxylic acid anhydride group. The molecular weight thereof, as a weight average molecular weight, is preferably 500 to 20,000, more preferably 1,000 to 15,000. In the above polyolefin wax, the amount of a carboxyl group or a carboxylic acid anhydride group per g of the lubricant having at least one functional group selected from a carboxyl group and a carboxylic acid anhydride group is preferably in the range of 0.05 to 10 meq/g, more preferably 0.1 to 6 meq/g, still more preferably 0.5 to 4 meq/g. With regard to the amount ratio of the functional group in the breaking-inhibiting agent, the amount ratio of other functional group different from the carboxyl group is preferably in the same range as that of the above carboxyl group or carboxylic acid anhydride group.

The breaking-inhibiting agent particularly preferably includes a copolymer of $\alpha$-olefin and maleic anhydride. This copolymer can be produced by a melt polymerization or bulk polymerization method in the present of a radical polymerization catalyst according to a conventional method. The above $\alpha$-olefin preferably includes an olefin having an average of 10 to 60 carbon atoms. The $\alpha$-olefin more preferably includes an olefin having an average of 16 to 60 carbon atoms, still more preferably includes an olefin having an average of 25 to 55 carbon atoms.

The amount of the above breaking-inhibiting agent per 100 parts by weight of the polycarbonate resin (component A) for use in this invention is preferably 0.01 to 2 parts by weight, more preferably 0.05 to 1.5 parts by weight, still more preferably 0.01 to 0.8 part by weight.

(ii) Organic filler

In this invention, the resin composition for constituting the substrate may contain an organic filler, and examples of the organic filler include synthetic fibers such as an aramid fiber, a polyester fiber and a nylon fiber, and natural fibers such as kenaf, hemp and bamboo. Concerning the organic filler, it is similarly preferred to use a natural fiber from the viewpoint of an environmental burden. The amount of the organic filler is similar to that of the inorganic filler.

(iii) Flame retardant

In this invention, the resin composition for constituting the substrate may contain a flame retardant. The flame retardant includes halogen-containing flame retardants such as a brominated epoxy resin, brominated polystyrene, brominated polycarbonate, brominated polyacrylate and chlorinated polyethylene, phosphoric ester flame retardants such as a monophosphate compound and a phosphate oligomer compound, organic phosphorus flame retardants other than phosphate ester organic flame retardants, such as a phosphonite compound, a phosphonite oligomer compound, a phosphonitrile oligomer compound and a phosphonic acid amide compound, organic metal salt flame retardants such as an organic sulfonic acid alkali (alkaline earth) metal salt, a boric acid metal salt flame retardant and stannic acid metal salt flame retardant, silicone flame retardants, polyphosphoric acid ammonium flame retardants and triazine flame retardants. Further, flame retardant aids (e.g., sodium antimonate and antimony trioxide) and a dripping preventer (polytetrafluoroethylene having fibril formability) may be separately incorporated and used in combination with the flame retardant.

Of the above flame retardants, compounds containing none of a chlorine atom and a bromine atom serve to decrease an undesirable factor when incineration disposal or thermal recycling is carried out, so that these compounds are suitable as flame retardants for the molded article of this invention to decrease environmental burden, as one of the features.

The content of the flame retardant per 100 parts by weight of the polycarbonate resin (component A) is preferably in the range of 0.05 to 50 parts by weight. When it is less than 0.05 part by weight, no sufficient flame retardancy is exhibited. When it exceeds 50 parts by weight, the strength and heat resistance of a molded article are impaired.

(iv) Thermal stabilizer

In this invention, the resin composition for constituting the substrate preferably contains a phosphorus-containing stabilizer for further obtaining an excellent color hue and stabilized flowability. In particular, it is preferred to incorporate a pentaerythritol type phosphite compound of the following general formula (5) as a phosphorus-containing stabilizer.

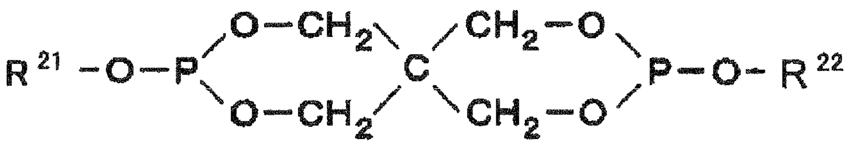 (5)

wherein each of $R^{21}$ and $R^{22}$ independently represents a hydrogen atom, an alkyl group having 1 to 20 carbon atoms, an aryl or alkylaryl group having 6 to 20 carbon atoms, an aralkyl group having 7 to 30 carbon atoms, a cycloalkyl group having 4 to 20 carbon atoms or a 2-(4-oxyphenyl)propyl-substituted aryl group having 15 to 25 carbon atoms. The cycloalkyl group and the aryl group may have an alkyl group as a substituent.

More specific examples of the above pentaerythritol type phosphite compound include distearylpentaerythritol diphosphite, bis(2,4-di-tert-butylphenyl)pentaerythritol diphosphite, bis(2,6-di-tert-butyl-4-methylphenyl)pentaerythritol diphosphite, bis(2,6-di-tert-butyl-4-ethylphenyl)pentaerythritol diphosphite, phenylbisphenol A pentaerythritol diphosphite, bis(nonylphenyl)pentaerythritol diphosphite, and dicyclohexyl pentaerythritol diphosphite. Of these, distearylpentaerythritol diphosphite, bis(2,4-di-tert-butylphenyl)pentaerythritol diphosphite and bis(2,6-di-tert-butyl-4-methylphenyl) pentaerythritol diphosphite are preferred.

Other phosphorus-containing stabilizers include various phosphite compounds other than the above-described, phosphonite compounds and phosphate compounds.

Examples of the phosphite compounds include triphenyl phosphite, tris(nonylphenyl) phosphite, tridecyl phosphite, trioctyl phosphite, trioctadecyl phosphite, didecylmonophenyl phosphite, dioctylmonophenyl phosphite, diisopropylmonophenyl phosphite, monobutyldiphenyl phosphite, monodecyldiphenyl phosphite, monooctyldiphenyl phosphite, 2,2-methylenebis(4,6-di-tert-butylphenyl)octyl phosphite, tris(diethylphenyl) phosphite, tris(di-iso-propylphenyl) phosphite, tris(di-n-butylphenyl) phosphite, tris(2,4-di-tert-butylphenyl) phosphite and tris(2,6-di-tert-butylphenyl) phosphite.

Further, there can be also used other phosphite compounds that react with dihydric phenols and have cyclic structures. Examples thereof include 2,2'-methylenebis(4,6-di-tert-butylphenyl)(2,4-di-tert-butylphenyl) phosphite, 2,2'-methylenebis(4,6-di-tert-butylphenyl)(2-tert-butyl-4-methylphenyl) phosphite, 2,2'-methylenebis(4-methyl-6-tert-butylphenyl)(2-tert-butyl-4-methylphenyl) phosphite, and 2,2'-ethylidenebis(4-methyl-6-tert-butylphenyl)(2-tert-butyl-4-methylphenyl) phosphite.

The phosphate compounds include tributyl phosphate, trimethyl phosphate, tricresyl phosphate, triphenyl phosphate, trichlorophenyl phosphate, triethyl phosphate, diphenylcresyl phosphate, diphenylmonoorthoxenyl phosphate, tributoxyethyl phosphate, dibutyl phosphate, dioctyl phosphate and diisopropyl phosphate. Triphenyl phosphate and trimethyl phosphate are preferred.

The phosphonite compounds include tetrakis(2,4-di-tert-butylphenyl)-4,4'-biphenylene diphosphonite, tetrakis (2,4-di-tert-butylphenyl)-4,3'-biphenylene diphosphonite, tetrakis(2,4-di-tert-butylphenyl)-3,3'-biphenylene diphosphonite, tetrakis(2,6-di-tert-butylphenyl)-4,4'-biphenylene diphosphonite, tetrakis(2,6-di-tert-butylphenyl)-4,3'-biphenylene diphosphonite, tetrakis(2,6-di-tert-butylphenyl)-3,3'-biphenylene diphosphonite, bis(2,4-di-tert-butylphenyl)-4-phenyl-phenyl phosphonite, bis(2,4-di-tert-butylphenyl)-3-phenyl-phenyl phosphonite, bis(2,6-di-n-butylphenyl) -3-phenyl-phenyl phosphonite, bis(2,6-di-tert-butylphenyl)-4-phenyl-phenyl phosphonite and bis(2,6-di-tert-butylphenyl)-3-phenyl-phenyl phosphonite. Tetrakis(di-tert-butylphenyl)-biphenylene diphosphonite and bis(di-tert-butylphenyl)-phenyl-phenyl phosphonite are preferred, and tetrakis(2,4-di-tert-butylphenyl)-biphenylene diphosphonite and bis (2,4-di-tert-butylphenyl)-phenyl-phenyl phosphonite are more preferred. The above phosphonite compound can be used, and preferably used, in combination with the above phosphite compound having an aryl group in which two or more alkyl groups are substituted.

The phosphonate compounds include a dimethyl benzenephosphonate, diethyl benzenephosphonate and dipropyl benzenephosphonate.

The above phosphorus-containing stabilizers can be used singly or in combination of the two or more of them, and it is preferred to incorporate at least an effective amount of the pentaerythritol type phosphite compound. The amount of the phosphorus-containing stabilizer that is incorporated per 100 parts by weight of the polycarbonate resin (component A) is preferably 0.001 to 1 part by weight, more preferably 0.01 to 0.5 part by weight, still more preferably 0.01 to 0.3 part by weight.

(v) Elastic polymer

In this invention, the resin composition for constituting the substrate may contain an elastic polymer as an impact reducing agent. The elastic polymer includes, for example, a graft copolymer obtained by copolymerization of natural rubber or a rubber component having a glass transition temperature of 10°C or lower with one or more of

monomers selected from aromatic vinyl, vinyl cyanide, acrylic ester, methacrylic ester and vinyl compounds compolymerizable with these. More preferably, the elastic polymer is a core-shell type graft copolymer in which a shell of one or more of the above monomers is graft-copolymerized on a core of a rubber component.

Further, it also includes block copolymers of the above rubber component and the above monomers. The block copolymer specifically includes thermoplastic elastomers such as a styrene-ethylenepropylene-styrene elastomer (hydrogenated styrene-isoprene-styrene elastomer) and hydrogenated styrene-butadiene-styrene elastomer. Further, there can be also used various elastic polymers known as other thermoplastic elastomers, such as polyurethane elastomer, polyester elastomer and polyetheramide elastomer.

The impact reducing agent is preferably a core-shell type graft copolymer. In the core-shell type graft copolymer, the particle diameter of the core as a weight average particle diameter is preferably 0.05 to 0.8 μm, more preferably 0.1 to 0.6 μm, still more preferably 0.1 to 0.5 μm. When it is within the range of 0.05 to 0.8 μm, excellent impact resistance is accomplished. The elastic polymer preferably contains 40 % or more of a rubber component, more preferably 60 % or more of a rubber component.

The rubber component includes butadiene rubber, butadiene-acryl composite rubber, acrylic rubber, acryl-silicone composite rubber, isobutylene-silicon composite rubber, isoprene rubber, styrene-butadiene rubber, chloroprene rubber, ethylene-propylene rubber, nitrile rubber, ethylene-acrylic rubber, silicone rubber, epichlorohydrin rubber, fluorine rubber and those formed by hydrogenation of unsaturated bonding portions of these. Out of concern for emission of harmful substances in combustion, rubber components free of halogen atoms are preferred from the viewpoint of environmental burdens.

The glass transition temperature of the rubber component is preferably -10˚C or lower, more preferably - 30˚C or lower. The rubber component in particular preferably includes butadiene rubber, butadiene-acryl composite rubber, acrylic rubber and acryl-silicone composite rubber. The composite rubber refers to a rubber obtained by copolymerization of two rubber components or a rubber having an IPN structure in which two rubber components are inseparably, mutually entangled.

The aromatic vinyl in the vinyl compound that is copolymerized with the rubber component includes styrene, α-methylstyrene, p-methylstyrene, alkoxystyrene and halogenated styrene, and in particular, styrene is preferred. The acrylic ester includes methyl acrylate, ethyl acrylate, butyl acrylate, cyclohexyl acrylate and octyl acrylate, and the methacrylic ester includes methyl methacrylate, ethyl methacrylate, butyl methacrylate, cyclohexyl methacrylate and octyl methacrylate. In particular, methyl methacrylate is preferred. Of these, the elastic polymer preferably contains in particular methacrylic ester such as methyl methacrylate as an essential component. More specifically, the content of the methacrylic ester per 100 % by weight of the graft component (per 100 parts by weight of a shell in case of the core-shell polymer) is preferably 10 % by weight or more, more preferably 15 % by weight or more.

The elastic polymer containing a rubber component having a glass transition temperature of 10˚C or lower may be a polymer produced by any polymerization method of bulk polymerization, solution polymerization, suspension polymerization and emulsion polymerization methods, and the polymerization method may be a single-stage method or a multiple-stage method. Further, it may be a mixture with a copolymer of a graft component only that is by-produced during production. In addition to a general emulsion polymerization method, the polymerization method also includes a soap-free polymerization method using an initiator such as potassium persulfate, a seed polymerization method and a two-stage swelling polymerization method. Further, in the suspension polymerization method, there may be carried out a method in which an aqueous phase and a monomer phase are individually held and fed accurately to a continuous dispersing machine so as to control a particle diameter on the basis of the rotation speed of the dispersing machine. In a continuous production method, there may be carried out a method in which a monomer phase was supplied to an aqueous liquid having dispersing capability through small-diameter orifices having a diameter of several to tens μm or a porous filter so as to control the particle diameter. In the core-shell type graft polymer, the reaction for each of the core and the shell may be a single-stage reaction or a multiple-stage reaction.

These elastic polymers are easily commercially available. For example, those which mainly contain butadiene rubber, acrylic rubber or butadiene-acryl composite rubber as a rubber component include Kane Ace B series (e.g., B-56) supplied by Kanegafuchi Chemical Ind. Co., Ltd., METABLEN C series (e.g., C-223A) and W series (e.g., W-450A) supplied by Mitsubishi Rayon Co., Ltd., Paraloid EXL series (e.g., EXL-2602), HIA Series (e.g., HIA-15), BTA series (e.g., BTA-III) and KCA series supplied by Kureha Chemical Industry Co., Ltd., Paraloid EXL series and KM series (e.g., KM-336P and KM-357P) supplied by Rohm & Haas Company, and UCL modifier resin series supplied by Ube Saikon Co., Ltd. UMG-AXS resin series supplied by UMG-ABS K.K. Those which mainly contain acryl-silicone composite rubber as a rubber component include a product which is commercially available from Mitsubishi Rayon Co., Ltd. in a trade name of METABLEN S-2001 or SRK-200.

The amount of the impact reducing agent per 100 parts by weight of the polycarbonate resin (component A) is preferably 0.2 to 50 parts by weight, more preferably 1 to 30 parts by weight, still more preferably 1.5 to 20 parts by weight. When the amount thereof is within the above range, the composition can be imparted with excellent impact resistance with inhibiting the rigidity from decreasing.

(iv) Other additives

In this invention, the resin composition for constituting the substrate may contain other thermoplastic resin (e.g., other polycarbonate resin, aromatic polyester resin, an aliphatic polyester resin, a polyallylate resin, a liquid-crystalline polyester resin, a polyamide resin, a polyimide resin, a polyetherimide resin, a polyurethane resin, a silicone resin, a polyphenylene ether resin, a polyphenylene sulfide resin, a polysulfone resin, polyolefin resins such as polyethylene and polypropylene, a polystyrene resin, an acrylonitrile/styrene copolymer (AS resin), an acrylonitrile/butadiene/styrene copolymer (ABS resin), a polysulfone resin, a high-impact polystyrene resin, a syndiotactic polystyrene resin, a polymethacrylate resin and a phenoxy or epoxy resin, an antioxidant (e.g., a hindered phenol compound and a sulfur antioxidant), an ultraviolet absorbent (benzotriazole, triazine and benzophenone ultraviolet absorbents), a light stabilizer (HALS), a mold release agent (saturated fatty acid ester, unsaturated fatty acid ester, polyolefin wax, a fluorine compound, paraffin wax and beeswax), a flowability modifier (polycaprolactone), a colorant (carbon black, titanium dioxide, various organic dyes and metallic pigment), a light scattering agent (acryl crosslinked particles and silicone crosslinked particles), a fluorescent brightener, a phosphorescent pigment, a fluorescent dye, an antistatic agent, inorganic and inorganic anti-fungus agents, a photocatalytic stain-proofing agent (titanium oxide fine particles and zinc oxide fine particles), an infrared absorbent and a photochromic ultraviolet absorbent, so long as the effects of this invention can be exhibited. These various additives can be used in well-known amounts when they are added to thermoplastic resins such as bisphenol A polycarbonate.

(Process for producing resin composition)

For producing the resin composition for constituting the substrate in this invention, any arbitrary process can be employed. For example, there is employed a method in which components and other arbitrary components are pre-mixed, and then the preliminary mixture is melt-kneaded and pelletized. The pre-mixing means include a Nauta-mixer, a V-blender, a Henschel mixer, a mechano-chemical apparatus and an extrusion mixer. In the pre-mixing, the resin composition may be granulated with an extrusion granulator or a briquetting machine as required. After pre-mixed, the preliminary mixture is melt-kneaded with a melt-kneading machine typified by a vented twin-screw extruder and pelletized with an apparatus such as a pelletizer. The melt-kneading machine further includes a Banbury mixer, a kneading roll and a constant-temperature stirrer, while a vented twin-screw extruder is preferred. In addition, there may be employed a method in which each components and other arbitrary components are independently fed to a melt-kneading machine typified by a twin-screw extruder without pre-mixing them. When the melt-kneading is carried out, the cylinder temperature is preferably in the range of 190 to 270˚C, more preferably 200 to 260˚C, still more preferably 200 to 250˚C. When the cylinder temperature exceeds 270˚C, the development of thermal decomposition of the polycarbonate used in this invention comes to be increased.

<Process for producing insert-molded article>

The insert-molded article of this invention is produced, for example, by the following process.

[Preliminary shaping step]

This is a preliminary shaping step in which a functional resin film is processed in a desired form depending upon the form of a molded article prior to the insert-molding. It is preferred to carry out the preliminary shaping since the functional resin film can be insert-molded even in a complicated three-dimensional form owing to the preliminary shaping.

The preliminary shaping method is as follows. That is, the functional resin film is heated while it is held with clamps, etc., and this functional film is softened to render it plastic-deformable. Then, the softened functional resin film is vacuum-sucked through a plurality of vacuum holes of a vacuum mold to bring the functional resin film into intimate contact along the form of the mold surface. The method of bringing it into intimate contact with the mold surface is not necessary required to be vacuum sucking, while the vacuum sucking is normal. When the functional resin film is cooled to be hardened, there is obtained a functional resin film to which a desired molded article form is transferred.

[Trimming step]

The functional resin film obtained by the preliminary shaping step is trimmed into a desired form by cutting off an extra portion other than a mold mirror surface portion. The trimming can be carried out with a laser or a die cutter. A die cutter (die-cutting) is normally used than a laser.

[Insert molding step]

The functional resin film which is processed in a desired form by the preliminary shaping and trimming steps is attached to a movable side such that the backing layer side comes in contact with a substrate resin. Then, the substrate resin is injected through nozzles of an injection-molding machine to be introduced into a cavity. In this case, the functional resin film comes to be intimate contact along the mold under a pressure from the substrate resin. And, part of the backing layer of the functional resin film is melted by the heat of the substrate resin, and the functional resin film and the substrate resin are bonded to each other.

The above injection molding is a step in which a polycarbonate resin containing a constitutional unit derived from a dihydroxy compound represented by the following formula (a) is injected into the mold to mold an article.

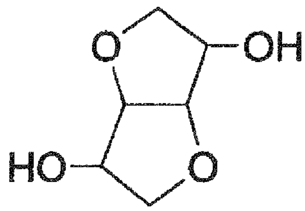

(a)

The polycarbonate resin is injection-molded at a cylinder temperature in the range of 190 to 270˚C. For inhibiting the coloring and the decreasing of a molecular weight caused by decomposition of the polycarbonate resin, the above temperature is more preferably in the range of 200 to 260˚C, still more preferably in the range of 200 to 250˚C. When the cylinder temperature exceeds 270˚C, the decomposition of the polycarbonate resin is greatly promoted. When the mold temperature is in the range of 40 to 140˚C, the injection molding is preferably carried out. For shortening the molding cycle and decreasing the time period for the melting and residing of a resin, the mold temperature is preferably 40 to 120˚C, more preferably in the range of 40 to 100˚C.

The injection molding can be carried out not only by a normal cold runner molding method but also by a hot runner molding method. In this injection-molding, a molded article can be obtained by an insert molding method.

<Use fields of insert-molded article>

The insert-molded article of this invention is suitable for housings, for example, of office automation machines and equipment and home electric appliances. Examples thereof include housings of a personal computer, a notebook computer, game machines (a home video game machine, an arcade video game machine, a Japanese pinball (pachinko) machine and a coin machine), displays (CRT, liquid crystal, plasma, projector and organic EL), a mouse, a printer, a copying machine, a scanner and a facsimile machine (including a complex machine of these) and switch molded articles such as a key of a keyboard and various switches. Further, the insert-molded article of this invention is also useful in other broad applications, and the molded article of this invention can be applied to optical parts or members such as various lenses, recording media (CD, MD, DVD, Blue-ray Disc, a next-generation high-density disc, and a hard disc), and housings of electronic and electric machines and equipment such as a handheld terminal (so-called PDA), a cellphone, a portable book (dictionaries), a portable TV set, a drive for a recording medium, a readout system for recording media (IC card, smart media and memory stick), an optical camera, a digital camera, a parabolic antenna, an electric power tool, VTR, a clothes iron, a hair dryer, a rice cooker, a microwave oven, an acoustic instrument, a lighting apparatus, a refrigerator, an air-conditioning apparatus, an air purification system, a minus ion generator and a typewriter. Further, it is also suitable for electric and electronic parts such as a connector, a switch, a relay and a condenser, various containers, and general merchandises such as covers, main tools of writing and accessories. Further, it includes on-vehicle electric components such as a lamp socket, a lamp reflector, a lamp housing, an instrumental panel, a center console panel, a deflecting part, parts of a car navigation system, a part of car audio-visual equipment and a harness connector, on-vehicle mechanism parts and parts for vehicles such as a part of an auto mobile computer.

The insert-molded article of this invention can be imparted with other function by applying surface modification thereto. The above surface modification refers to the formation of a new layer on the surface layer of a resin molded article by vapor deposition (physical vapor deposition and chemical vapor deposition), plating (electric plating, electroless plating and hot dipping), painting, coating or printing, and a method generally used for a resin molded article can be applied.

Examples

This invention will be explained in detail with reference to Examples, while this invention shall not be limited to these Examples. Polycarbonate resins were prepared according to methods shown in the following production examples. Various values in Examples were determined according to the following methods.

(1) Melt viscosity

A shear rate/viscosity curve was obtained by measurements using a capillary rheometer (Capilograph 1D) supplied by Toyo Seiki Seisaku-sho, Ltd. at a capillary length of 10.0 mm at a capillary diameter of 1.0 mm and at a measurement temperature of 240˚C while arbitrarily changing measurement speeds, and a melt viscosity at 6,080 $sec^{-1}$ was read from it.

(2) Glass transition temperature (Glass transition point)

Measured by DSC (model DSC2910) supplied by TA Instruments Inc.

(3) 5 % Weight loss temperature

Measured by TGS (model TGA2950) supplied by TA Instruments Inc.

(4) Specific viscosity ($\eta_{sp}$)

Pellets were dissolved in methylene chloride to form a solution having a concentration of about 0.7 g/dL, and the solution was measured with an Ostwald viscometer (apparatus name: RIGO AUTO VISCOSIMETER TYPE VMR-0525·PC) at a temperature of 20˚C. A specific viscosity ($\eta_{sp}$) was determined on the basis of the following expression.

$$\eta_{sp} = t/t_0 - 1$$

t: A flow time of a sample solution
$t_0$: A flow time of a solvent alone

(5) Scratch resistance

An obtained insert-molded article was used, and its resin surface and decorative film surface were measured for pencil hardness according to a test method based on JIS K5600.

(6) Chemical resistance (solvent resistance)

Obtained insert-molded articles were immersed in toluene, xylene, acetone and trichloroethane at room temperature for 24 hours, and then visually observed for surface states.

○: Not affected, Δ: Partially whitened, ×: Dissolved or whitened.

(7) Flexural strength, flexural modulus

Flexural properties were measured according to ISO178 (form of test piece: 80 mm long x 10 mm wide x 4 mm thick)

Example 1

The following was used as a functional resin film. "NT-Hilamic" (registered trademark) 701R white supplied by Dainichiseika Color & Chemicals Mfg., Co., Ltd. was adjusted to a printing viscosity of 15 seconds (Zahn cup #3) with a mixture solution of an ethyl acetate/methyl ethyl ketone/isopropyl alcohol = 2:2:1, and a pattern was printed on an acryl base film by a gravure printing method and dried in an oven at 70˚C for 10 seconds to form a 35 μm thick decorating layer.

A polycarbonate resin for a substrate was prepared by the following method.

1,608 Parts (11 mol) by weight of isosorbide (to be sometimes referred to as ISS hereinafter) and 2,356 parts by weight (11 ml) of diphenyl carbonate were placed in a reaction vessel, 1.0 part by weight ($1x10^{-4}$ mol per mole of the diphenyl carbonate component) of tetramethylammonium hydroxide and $1.1x10^{-3}$ part by weight ($0.25x10^{-6}$ mol per mole of the diphenyl carbonate component) of sodium hydroxide as polymerization catalysts were charged, and they were melted by heating them to 180˚C in a nitrogen atmosphere under atmospheric pressure.

The pressure in the reaction vessel was gradually reduced over 30 minutes with stirring, and reduced down to $13.3x10^{-3}$ MPa while a generated phenol was distilled off. In this state, they were allowed to react for 20 minutes, and then were raised to 200˚C, and the pressure in the reaction vessel was gradually reduced over 20 minutes. They were allowed to react at $4.00x10^{-3}$ MPa for 20 minutes while a phenol was distilled off, and they were raised to 220˚C to react for 30 minutes, and further raised to 250˚C to react for 30 minutes.

Then, the pressure in the reaction vessel was gradually reduced, the reaction was proceeded with at $2.67x10^{-3}$ MPa for 10 minutes and at $1.33x10^{-3}$ MPa for 10 minutes, and the pressure was further decreased. When the pressure reached $4.00x10^{-5}$ MPa, the temperature was gradually raised to 260˚C, and they were allowed to react finally at 260˚C at $6.66x10^{-5}$ MPa for 1 hour. A polymer after the reaction was pelletized. The thus-obtained polymer had a specific viscosity of 0.26, a glass transition temperature of 163˚C and a 5 % weight loss temperature of 347˚C.

An insert-molded article with the functional resin film was produced using the above resin as a molding material.

[Preliminary shaping step]

While the decorative film was held with clamps, it was brought into intimate contact with a preliminary shaping mold heated at 80˚C, and the mold was closed to process it in a desired molded article form.

[Trimming step]

Extra portions other than a mold mirror surface portion of the decorative film obtained by the preliminary shaping step were cut off with scissors.

[Insert-molding step]

The decorative film that was processed in a desired form by the preliminary shaping and trimming steps was attached to a movable side in the cavity of a mold such that the backing layer side came in contact with the substrate resin. Pellets of the polycarbonate resin produced were dried at 120˚C with a hot air dryer for 4 hours, and molded with a molding machine having a clamping force of 1,470 kN at a cylinder temperature of 250˚C and a mold temperature of 80˚C to give an insert-molded article. The insert-molded article was evaluated for scratch resistance and tested for chemical resistance.

Example 2

Melt polymerization for a polycarbonate resin was carried out in the same manner as in Example 1 except that 66.42 parts by weight (0.45 mol) of isosorbide, 11.52 parts by weight (0.15 mol) of 1,3-propanediol (to be sometimes referred to as "PD" hereinafter) and 129.81 parts by weight (0.61 mol) of diphenyl carbonate were placed in a reaction vessel, and that 1.0 part by weight ($1x10^{-4}$ mol per mole of the diphenyl carbonate component) of tetramethylammonium hydroxide and $1.1x10^{-3}$ part by weight ($0.25x10^{-6}$ mol per mole of the diphenyl carbonate component) of sodium hydroxide were used as polymerization catalysts. The thus-obtained polymer had a specific viscosity of 0.25, a glass transition temperature of 116˚C and a 5 % weight loss temperature of 338˚C. An insert-molded article with a functional resin film was produced using the above resin as a molding material, and evaluated, in the same manner as in Example 1.

Example 3

Melt polymerization for a polycarbonate resin was carried out in the same manner as in Example 1 except that 804 parts by weight (5.5 mol) of isosorbide, 1,256 parts by weight (5.5 mol) of bisphenol A (BPA) and 2,356 parts by weight (11 mol) of diphenyl carbonate were placed in a reaction vessel, and that 1.0 part by weight ($1x10^{-4}$ mol per mole of the diphenyl carbonate component) of tetramethylammonium hydroxide and $1.1x10^{-3}$ part by weight ($0.25x10^{-6}$ mol per mole of the diphenyl carbonate component) of sodium hydroxide were used as polymerization catalysts. The thus-obtained polymer had a specific viscosity of 0.35, a glass transition temperature of 153˚C and a 5 % weight loss temperature of 366˚C.

An insert-molded article with a functional resin film was produced using the above resin as a molding material,

and evaluated, in the same manner as in Example 1.

Example 4

Melt polymerization for a polycarbonate resin was carried out in the same manner as in Example 1 except that 1,242 parts by weight (8.5 mol) of isosorbide, 490 parts by weight (1.5 mol) of 1,1-bis(4-hydroxyphenyl)decane (to be sometimes abbreviated as "DED" hereinafter) and 2,142 parts by weight (10 mol) of diphenyl carbonate were placed in a reaction vessel, and that 1.0 part by weight ($1x10^{-4}$ mol per mole of the diphenyl carbonate component) of tetramethylammonium hydroxide and $1.1x10^{-3}$ part by weight ($0.25x10^{-6}$ mol per_ mole of the diphenyl carbonate component) of sodium hydroxide were used as polymerization catalysts. The thus-obtained polymer had a specific viscosity of 0.25, a glass transition temperature of 124˚C and a 5 % weight loss temperature of 357˚C.

An insert-molded article with a functional resin film was produced using the above resin as a molding material, and evaluated, in the same manner as in Example 1.

Example 5

Melt polymerization for a polycarbonate resin was carried out in the same manner as in Example 1 except that 1,608 parts by weight (11 mol) of isosorbide, 2,356 parts by weight (11 mol) of diphenyl carbonate and 59 parts by weight (0.22 mol) of stearyl alcohol were placed in a reaction vessel, and that 1.0 part by weight ($1x10^{-4}$ mol per mole of the diphenyl carbonate component) of tetramethylammonium hydroxide and $1.1x10^{-3}$ part by weight ($0.25x10^{-6}$ mol per mole of the diphenyl carbonate component) of sodium hydroxide were used as polymerization catalysts. The thus-obtained polymer had a specific viscosity of 0.28, a glass transition temperature of 150˚C and a 5 % weight loss temperature of 362˚C.

An insert-molded article with a functional resin film was produced using the above resin as a molding material, and evaluated, in the same manner as in Example 1.

Example 6

50 parts of the polycarbonate resin pellets prepared in Example 1 and 50 parts of the copolycarbonate resin pellets prepared in Example 2 were blended in a blender to give a polycarbonate resin blend having a 87 molt of an isosorbide constitutional unit and 13 mol% of a 1,3-propanediol constitutional unit. The thus-obtained polymer had a specific viscosity of 0.26, a glass transition temperature of 140˚C and a 5 % weight loss temperature of 348˚C.

An insert-molded article with a functional resin film was produced using the above resin as a molding material, and evaluated, in the same manner as in Example 1.

Example 7

A metallic tone decorative film, Supertechmirror (trade name) supplied by Japan Wavelock Co., Ltd., was used as a functional resin film.

Melt polymerization for a polycarbonate resin was carried out in the same manner as in Example 1 except that 1,169 parts by weight (8 mol) of isosorbide, 2,142 parts by weight (10 mol) of diphenyl carbonate and 236 parts by weight (2 mol) of hexanediol (to be sometimes referred to as "HD" hereinafter) were placed in a reaction vessel, and that 1.0 part by weight ($1x10^{-4}$ mol per mole of the diphenyl carbonate component) of tetramethylammonium hydroxide and $1.1x10^{-3}$ part by weight ($0.25x10^{-6}$ mol per mole of the diphenyl carbonate component) of sodium hydroxide were used as polymerization catalysts. The thus-obtained polymer had a specific viscosity of 0.26, a glass transition temperature of 111˚C and a 5 % weight loss temperature of 350˚C.

An insert-molded article with the functional resin film was produced using the above resin as a molding material.

[Preliminary shaping step]

While the metallic tone decorative film was held with clamps, it was brought into intimate contact with a preliminary shaping mold heated at 80˚C, and the mold was closed to process it in a desired molded article form.

[Trimming step]

Extra portions other than a mold mirror surface portion of the metallic tone decorative film obtained by the preliminary shaping step were cut off with scissors.

[Insert-molding step]

The metallic tone decorative film that was processed in a desired form by the preliminary shaping and trimming steps was attached to a movable side in the cavity of a mold such that the backing layer side came in contact with the substrate resin. Pellets of the polycarbonate resin produced were dried at 100˚C with a hot air dryer for 6 hours, and molded with a molding machine (T-150D, supplied by FANUC Ltd. ) having a clamping force of 1,470 kN at a cylinder temperature of 220˚C and a mold temperature of 70˚C to give an insert-molded article. The insert-molded article was evaluated for scratch resistance and tested for chemical resistance.

Example 8

Melt polymerization for a polycarbonate was carried out in the same manner as in Example 1 except that 1,169 parts by weight (8 mol) of isosorbide, 2,142 parts by weight (10 mol) of diphenyl carbonate and 236 parts by weight (2 mol) of hexanediol were placed in a reaction vessel, and that 1.0 part by weight ($1x10^{-4}$ mol per mole of the diphenyl carbonate component) of tetramethylammonium hydroxide and $1.1x10^{-3}$ part by weight ($0.25x10^{-6}$ mol per mole of the diphenyl carbonate component) of sodium hydroxide were used as polymerization catalysts. The thus-obtained polymer had a specific viscosity of 0.36, a glass transition temperature of 113'C and a 5 % weight loss temperature of 352˚C.

An insert-molded article with a functional resin film was produced using the above resin as a molding material, and evaluated, in the same manner as in Example 1.

Example 9

Melt polymerization for a polycarbonate was carried out in the same manner as in Example 1 except that 1,096 parts by weight (7.5 mol) of isosorbide, 2,142 parts by weight (10 mol) of diphenyl carbonate and 295 parts by weight (2.5 mol) of hexanediol were placed in a reaction vessel, and that 1.0 part by weight ($1x10^{-4}$ mol per mole of the diphenyl carbonate component) of tetramethylammonium hydroxide and $1.1x10\text{-}^{3}$ part by weight ($0.25x10^{-6}$ mol per mole of the diphenyl carbonate component) of sodium hydroxide were used as polymerization catalysts. The thus-obtained polymer had a specific viscosity of 0.28, a glass transition temperature of 97˚C and a 5 % weight loss temperature of 349˚C.

An insert-molded article with a functional resin film was produced using the above resin as a molding material, and evaluated, in the same manner as in Example 1.

Example 10

Melt polymerization for a polycarbonate was carried out in the same manner as in Example 1 except that 1,096 parts by weight (7.5 mol) of isosorbide, 2,142 parts by weight (10 mol) of diphenyl carbonate and 295 parts by weight (2.5 mol) of hexanediol were placed in a reaction vessel, and that 1.0 part by weight ($1x10^{-4}$ mol per mole of the diphenyl carbonate component) of tetramethylammonium hydroxide and $1.1x10^{-3}$ part by weight ($0.25x10\text{-}^{6}$ mol per mole of the diphenyl carbonate component) of sodium hydroxide were used as polymerization catalysts. The thus-obtained polymer had a specific viscosity of 0.34, a glass transition temperature of 99˚C and a 5 % weight loss temperature of 347˚C.

An insert-molded article with a functional resin film was produced using the above resin as a molding material, and evaluated, in the same manner as in Example 8.

Comparative Example 1

A bisphenol A-polycarbonate resin (PC-A) was melted and a film was formed in the same manner as in Example 1. The thus-obtained film was evaluated for scratch resistance. Table 1 shows the result. An insert-molded article with a functional resin film was produced using the above resin as a molding material, and evaluated, in the same manner as in Example 1.

Table 1

| | | | Example 1 | Example 2 | Example 3 | Example 4 | Example 5 | Example 6 |
|---|---|---|---|---|---|---|---|---|
| Composition | | | PC-ISS | PC-ISS/PD (75/25) | PC-ISS/BPA (50/50) | PC-ISS/DED (85/15) | PC-ISS terminal group C18O-2wt% | PC-ISS/PD (87/13) |
| Resin | Specific viscosity | | 0.24 | 0.25 | 0.35 | 0.25 | 0.28 | 0.26 |
| | Glass transition temperature (°C) | | 163 | 116 | 153 | 124 | 150 | 140 |
| | 5 % Weight loss temperature (°C) | | 347 | 338 | 366 | 357 | 362 | 348 |
| | Melt viscosity (Pa·s) | | 250 | 80 | 193 | 82 | 200 | 167 |
| | Flexural modulus (MPa) | | 3900 | 3810 | 3110 | — | 3820 | 3850 |
| | Flexural strength (MPa) | | 111 | 150 | 111 | — | 98 | 120 |
| | Pencil hardness | | H | F | B | HB | H | H |
| Insert-molded article | Solvent resistance | Toluene | ○ | ○ | ○ | ○ | ○ | ○ |
| | | Xylene | ○ | ○ | ○ | ○ | ○ | ○ |
| | | Acetone | △ | △ | △ | △ | △ | △ |
| | | Trichloroethane | ○ | ○ | ○ | ○ | ○ | ○ |
| | Pencil hardness | | 2H | 2H | 2H | 2H | 2H | 2H |

Table 1 (continued)

| | | | Example 7 | Example 8 | Example 9 | Example 10 | Comparative Example 1 |
|---|---|---|---|---|---|---|---|
| Composition | | | PC-ISS/HD (80/20) | PC-ISS/HD (80/20) | PC-ISS/HD (75/25) | PC-ISS/HD (75/25) | PC-A |
| Resin | Specific viscosity | | 0.26 | 0.36 | 0.28 | 0.34 | 0.36 |
| | Glass transition temperature (°C) | | 111 | 113 | 97 | 99 | 145 |
| | 5 % Weight loss temperature (°C) | | 350 | 352 | 349 | 347 | 476 |
| | Melt viscosity (Pa·s) | | 90 | 175 | 80 | 117 | 350 |
| | Flexural modulus (MPa) | | 3060 | 2960 | 2930 | 2850 | 2350 |
| | Flexural strength (MPa) | | 93 | 122 | 116 | 112 | 92 |
| | Pencil hardness | | H | H | F | F | 2B |
| Insert-molded article | Solvent resistance | Toluene | ○ | ○ | ○ | ○ | × |
| | | Xylene | ○ | ○ | ○ | ○ | × |
| | | Acetone | △ | △ | △ | △ | × |
| | | Trichloroethane | ○ | ○ | ○ | ○ | × |
| | Pencil hardness | | 2H | 2H | 2H | 2H | H |

Effect of the Invention

The molded article of this invention is obtained from a polycarbonate resin using biomass resources as a raw material and has high mechanical strength and high surface hardness. According to the production process of this invention, a polycarbonate resin excellent in melt flowability is used, so that the percentage of rejects of insert-molded articles obtained is small.

Industrial Applicability

The inert-molded article of this invention is useful in the fields of various optical members, electronic-electric machines and equipment, OA machines and equipment, parts for automobiles and machine parts and in other fields of agricultural materials, fishing materials, shipping containers, packaging containers, play game machines and tools and general merchandise.

## Claims

1. A molded article comprising a functional resin film and a substrate, the substrate being formed of a polycarbonate resin containing a constitutional unit derived from a dihydroxy compound represented by the following formula (a).

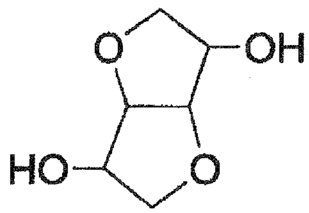

(a)

2. The molded article of claim 1, wherein the polycarbonate resin has a melt viscosity, measured with a capillary rheometer at 240°C under conditions of a shear rate of 6,080 $sec^{-1}$, in the range of 0.01 x $10^3$ to 0.30 x $10^3$ Pa·s.

3. The molded article of claim 1, wherein the content of the constitutional unit derived from a dihydroxy compound represented by the formula (a) in the polycarbonate resin is 100 to 30 mol% based on the total of carbonate bond units.

4. The molded article of claim 1, wherein the functional resin film is formed of at least one thermoplastic resin selected from the group consisting of a polyethylene terephthalate resin, a polybutylene terephthalate resin, a polycarbonate resin, an ABS resin and an acrylic resin.

5. A process for producing an insert molded article, which comprises the steps of

   (i) inserting a functional resin film in a mold, and
   (ii) injecting a polycarbonate resin containing a constitutional unit derived from a dihydroxy compound represented by the following formula (a) into the mold and molding the same therein.

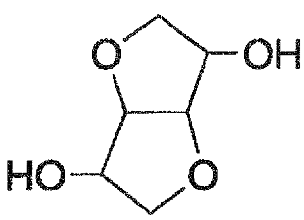

(a)

6. The process of claim 5, wherein the polycarbonate resin has a melt viscosity, measured with a capillary rheometer at 240°C under conditions of a shear rate of 6,080 $sec^{-1}$, in the range of 0.01 x $10^3$ to 0.30 x $10^3$ Pa·s.

7. The process of claim 5, wherein the content of the constitutional unit derived from a dihydroxy compound represented by the formula (a) in the polycarbonate resin is 100 to 30 mol% based on the total of carbonate bond units.

8. The process of claim 5, wherein the functional resin film is formed of at least one thermoplastic resin selected from the group consisting of a polyethylene terephthalate resin, a polybutylene terephthalate resin, a polycarbonate resin, an ABS resin and an acrylic resin.

**INTERNATIONAL SEARCH REPORT**

International application No.
PCT/JP2010/064428

A. CLASSIFICATION OF SUBJECT MATTER
*B32B27/36*(2006.01)i, *B29C45/14*(2006.01)i, *C08G64/02*(2006.01)i

According to International Patent Classification (IPC) or to both national classification and IPC

B. FIELDS SEARCHED

Minimum documentation searched (classification system followed by classification symbols)
B32B1/00-43/00, B29C45/00-45/24, C08G63/00-64/42

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2007-223203 A (Dainippon Ink And Chemicals, Inc.), 06 September 2007 (06.09.2007), claims; paragraph [0014] (Family: none) | 1-8 |
| Y | JP 2009-161746 A (Mitsubishi Chemical Corp.), 23 July 2009 (23.07.2009), claims 1, 10, 14, 16; paragraphs [0003], [0025], [0079] to [0081], [0091], [0127] & EP 2223951 A1 & KR 2010-0096157 A & WO 2009/075304 A1 | 1-8 |

☒ Further documents are listed in the continuation of Box C.

☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| | |
|---|---|
| Date of the actual completion of the international search<br>22 November, 2010 (22.11.10) | Date of mailing of the international search report<br>07 December, 2010 (07.12.10) |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.
PCT/JP2010/064428

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2008/093860 A1 (Teijin Ltd.), 07 August 2008 (07.08.2008), page 8, lines 17 to 21 & EP 2108671 A1 & US 2010/048854 A1 & KR 2009-0101446 A | 2,6 |
| A | WO 2004/111106 A1 (Teijin Ltd.), 23 December 2004 (23.12.2004), entire text & EP 1640400 A1 & US 2006/149024 A1 & KR 2006-0019597 A | 1-8 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- GB 1079686 A
- WO 2007013463 A
- JP 8002550 B
- JP 10329169 A
- JP 10329170 A
- JP 2001145981 A
- JP 2002240202 A
- JP 2002360809 A
- JP 2008032928 A


### Non-patent literature cited in the description


- *Journal of Applied Polymer Science,* 2002, vol. 86, 872-880
- *Macromolecules,* 1996, vol. 29, 8077-8082